# EUROPÄISCHE PATENTANMELDUNG

(11) **EP 0 828 358 A2**
(43) Veröffentlichungstag der Anmeldung: **11.03.1998**
(21) Anmeldenummer: 97440075.6
(22) Anmeldetag: 04.09.1997
(51) Int. Cl.: H04B 10/155

(54) **Sendeeinrichtung und Verfahren zur optischen Übertragung von elektrischen Frequenzmultiplexsignalen**

(30) Priorität: 05.09.1996 DE 19635990
(71) Anmelder: ALCATEL ALSTHOM COMPAGNIE GENERALE D'ELECTRICITE, 75008 Paris (FR)
(72) Erfinder: Junginger, Bernhard, 71229 Leonberg (DE)
(74) Vertreter: Schätzle, Albin, Dipl.-Phys.

(57) **Zusammenfassung**

Bei der optischen Übertragung von Frequenzmultiplexsignalen über eine optische Übertragungsleitung treten Verzerrungen der Unterträgersignalpegel auf, beispielsweise zunehmende Unterträgersignalpegel für zunehmende Frequenzen. Ein zu übertragendes Frequenzmultiplexsignal wird einer Vorverzerrungseinheit (VOR) zugeführt, die beispielsweise hohe Frequenzen dämpft. Die Vorverzerrungseinheit (VOR) beinhaltet dazu beispielsweise eine Spule (L) im Längszweig, mittels derer für zunehmende Frequenzen abfallende Unterträgersignalpegel generiert werden. Mit dem Wert der Spule (L) wird der Verlauf der abfallenden Unterträgersignalpegel umgekehrt proportional zum Verlauf der zu erwartenden Verzerrungen der Unterträgersignalpegel auf einer vorgegebenen optischen Übertragungsleitung eingestellt. Die vorverzerrten Signalgemische werden durch eine direkt modulierte Laserdiode (LAS) in optische Signale umgesetzt und optisch übertragen.

## Beschreibung

Die Erfindung betrifft eine Sendeeinrichtung nach dem Oberbegriff des Patentanspruchs 1 und ein Verfahren nach dem Oberbegriff des Patentanspruchs 7.

Frequenzmultiplexsignale bestehen aus mehreren Unterträgersignalen, die gleichzeitig über einen gemeinsamen Weg übertragen werden. Die einzelnen Unterträgersignale werden bei verschiedenen Trägerfrequenzen in verschiedenen Frequenzbändern übertragen.

Bei der optischen Übertragung von elektrischen Frequenzmultiplexsignalen über eine optische Übertragungsleitung tritt eine frequenzmäßige Änderung der einzelnen Signalpegel auf. Im Journal of Lightwave Technology, Vol. 10, No. 1, January 1992, ist auf den Seiten 96 bis 100 eine Kleinsignalanalyse für ein optisches Kommunikationssystem mit einem direkt modulierten Laser mit der Wellenlänge λ = 1550 nm, einer 30 km langen optischen Glasfaserleitung und einer Empfangseinrichtung beschrieben. Der Frequenzgang eines Frequenzmultiplexsignals steigt im benutzten Frequenzbereich z. B. stark an. Dies führt in Verbindung mit einer konstanten, frequenzunabhängigen Rauschleistungsdichte in der Empfangseinrichtung dazu, daß der Dynamikbereich für niederfrequente Unterträgersignale kleiner ist als für hochfrequente.

Es ist deshalb eine Aufgabe der Erfindung, die bei der optischen Übertragung von elektrischen Frequenzmultiplexsignalen entstehenden frequenzmäßigen Änderungen zu kompensieren.

Diese Aufgabe wird durch die Lehre der Patentansprüche 1 und 7 gelöst. Vorteilhafte Ausgestaltungen sind den abhängigen Patentansprüchen 2 bis 6 zu entnehmen.

Ein besonderer Vorteil der Erfindung ist, daß bei gleicher optischer Ausgangsleistung der Sendeeinrichtung eine höhere Reichweite bei der Übertragung der Frequenzmultiplexsignale erzielt werden kann. Des weiteren können Signale mit einer höheren Bandbreite übertragen werden. Ebenso kann bei gleicher Reichweite und gleicher Bandbreite die optische Ausgangsleistung der Sendeeinrichtung reduziert werden, was den Einsatz von kostengünstigeren Lasern möglich macht. Ferner wird durch die Erfindung der Aussteuerbereich der Ausgangsleistung der Sendeeinrichtung erhöht und in den Empfangseinrichtungen ein höherer, über die Frequenz konstanter Dynamikbereich erzielt.

Im folgenden wird die Erfindung anhand zweier Ausführungsbeispiele unter Zuhilfenahme der Figuren 1 bis 3 erläutert. Es zeigen:
- Fig. 1: eine schematische Darstellung eines erfindungsgemäßen Übertragungssystems zur Übertragung von elektrischen Frequenzmultiplexsignalen,
- Fig. 2: einen schematisch dargestellten Aufbau einer erfindungsgemäßen Sendeeinrichtung des Übertragungssystems,
- Fig. 3: einen schematisch dargestellten Aufbau einer Vorzerrungseinheit für die erfindungsgemäße Sendeeinrichtung für die Zentrale aus Fig. 2 und
- Fig. 4: zwei Diagramme zweier elektrischer Frequenzmultiplexsignale.

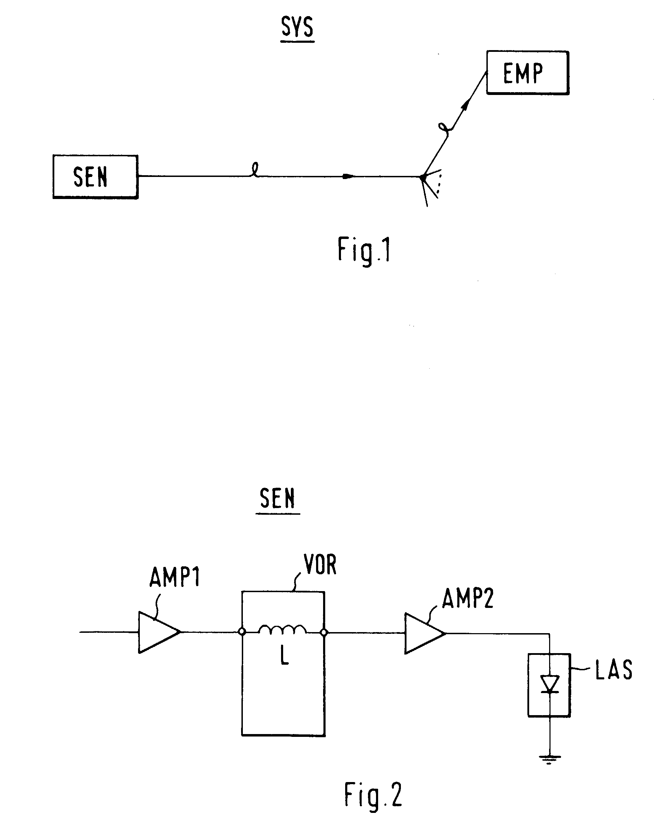

Das erste Ausführungsbeispiel wird nun anhand der Fig. 1 und 2 beschrieben. Fig. 1 zeigt ein Übertragungssystem SYS zur optischen Übertragung von elektrischen Frequenzmultiplexsignalen. Das Übertragungssystem SYS beinhaltet eine Sendeeinrichtung SEN, von der aus über eine optische Übertragungsleitung, die beispielsweise aus einer Glasfaserleitung aufgebaut ist, und ggf. optische Verstärker, die Frequenzmultiplexsignale optisch bis zu einem optischen Splitter übertragen werden. Die optische Übertragungsleitung bis zum optischen Splitter kann z. B. 200 bis 500 km lang sein. Die Frequenzmultiplexsignale werden im optischen Splitter, der beispielsweise ein 1:16 Splitter ist, aufgeteilt und gelangen über, z.B. 16 separate optische Übertragungsleitungen zu 16 Empfangseinrichtungen EMP, von denen eine dargestellt ist. Die separaten optischen Übertragungsleitungen sind z. B. 1 bis 20 km lang. In jeder Empfangseinrichtung EMP werden die empfangenen Frequenzmultiplexsignale optisch/elektrisch umgesetzt und können anschließend über Koaxialkabel zu mehreren Endstellen übertragen werden. Das Übertragungssystem SYS ist somit zur Verteilung von Kabelfernsehsignalen geeignet.

Fig. 2 zeigt die Sendeeinrichtung SEN, die zu Fig. 1 beschrieben wurde. Die zu übertragenden elektrischen Frequenzmultiplexsignale werden beispielsweise von einer Kabelfernsehkopfstation, die Fernsehsignale über eine Satellitenantenne empfängt, oder einen Video-Server, in dem eine Vielzahl von Videofilmen gespeichert sind, die über die empfangenen Abrufsignale abrufbar sind, bereitgestellt und der Sendeeinrichtung SEN zugeführt.

Die Sendeeinrichtung SEN dient dazu, die empfangenen Frequenzmultiplexsignale elektrisch/optisch umzusetzen und über die optischen Übertragungsleitungen zu den Empfangseinrichtungen EMP zu übertragen. Bei der Übertragung eines Frequenzmultiplexsignals treten, z.B. bedingt durch chromatische Dispersion, Verzerrungen der einzelnen Unterträgersignalpegel auf. Die Verzerrungen bewirken beispielsweise einen für zunehmende Frequenzen steigenden Verlauf der Unterträgersignalpegel, also einen ansteigenden Frequenzgang. So beträgt der Abstand zwischen den Unterträgersignalpegeln der Trägerfrequenzen 0,1 GHz und 1 GHz bei einer optischen Glasfaserleitung von 200 km Länge z. B. 9 dB.

Die Sendeeinrichtung SEN beinhaltet deshalb zur Kompensation der Verzerrungen eine Vorverzerrungseinheit VOR. Die Unterträgersignale eines empfangenen elektrischen Frequenzmultiplexsignals haben gleiche Signalpegel, also einen gleichmäßigen Frequenzgang. In der Vorverzerrungseinheit VOR wird aus diesem Frequenzmultiplexsignal ein Frequenzmultiplexsignal mit unterschiedlichen Signalpegeln generiert. Der Verlauf der Signalpegel wird idealerweise umgekehrt proportional zum Verlauf der zu erwartenden Verzerrungen der Signalpegel auf der vorgegebenen optischen Übertragungsleitung eingestellt. Bewirken die Verzerrungen beispielsweise einen für zunehmenden Frequenzen linear ansteigenden Verlauf der Signalpegel, so wird ein Frequenzmultiplexsignal generiert, dessen Unterträgersignalpegelverlauf für zunehmende Frequenzen linear abfällt. Die Schaltung der Vorverzerrungseinheit VOR beinhaltet eine Spule L im Längszweig. Die Impedanz der Spule L bewirkt, daß ein Frequenzmultiplexsignal mit gleichen Signalpegeln beim Durchlaufen der Vorverzerrungseinheit VOR in ein Frequenzmultiplexsignal mit für zunehmende Frequenzen abfallenden Unterträgersignalpegeln umgesetzt wird. Mit dem Wert der Spule L wird der Verlauf der Unterträgersignalpegel eingestellt.

Die Sendeeinrichtung SEN beinhaltet ferner zwei elektrische Verstärker AMP1, AMP2 und einen direkt modulierten Laser LAS, der als direkt modulierte Laserdiode ausgeführt ist und zur Umsetzung der vorverzerrten elektrischen Frequenzmultiplexsignale in optische Signale dient.

Der elektrische Verstärker AMP1 dient dazu die empfangenen elektrischen Frequenzmultiplexsignale zu verstärken und der Vorverzerrungseinheit VOR zuzuführen. Die empfangenen und die verstärkten Frequenzmultiplexsignale haben beide jeweils Unterträgersignale mit gleichen Unterträgersignalpegeln. Soll der elektrische Verstärker AMP1 lediglich als Entkopplungselement dienen, so kann der Verstärkungsfaktor auch gleich Eins sein.

Dem elektrischen Verstärker AMP 2 werden die in der Vorverzerrungseinheit VOR vorverzerrten Frequenzmultiplexsignale zugeführt. Der elektrische Verstärker AMP2 dient dazu, die vorverzerrten Frequenzmultiplexsignale zu verstärken und dem direkt modulierten Laser LAS zuzuführen. Der Verstärkungsfaktor des Verstärkers AMP2 ist derart gewählt, daß die mittlere Leistung des Eingangssignals des direkt modulierten Lasers LAS in einem von der Länge der optischen Übertragungsleitungen abhängigen, optimierten Bereich liegt. Die Einstellung der mittleren Leistung kann auch über den Verstärkungsfaktor des Verstärkers AMP1 erfolgen. Der elektrische Verstärker AMP2 dient in diesem Fall beispielsweise als Entkoppelelement mit dem Verstärkungsfaktor Eins.

Die Sendeeinrichtung SEN beinhaltet somit eine Hintereinanderschaltung von Verstärker AMP1, Vorverzerrungseinheit VOR, Verstärker AMP2 und direkt moduliertem Laser LAS.

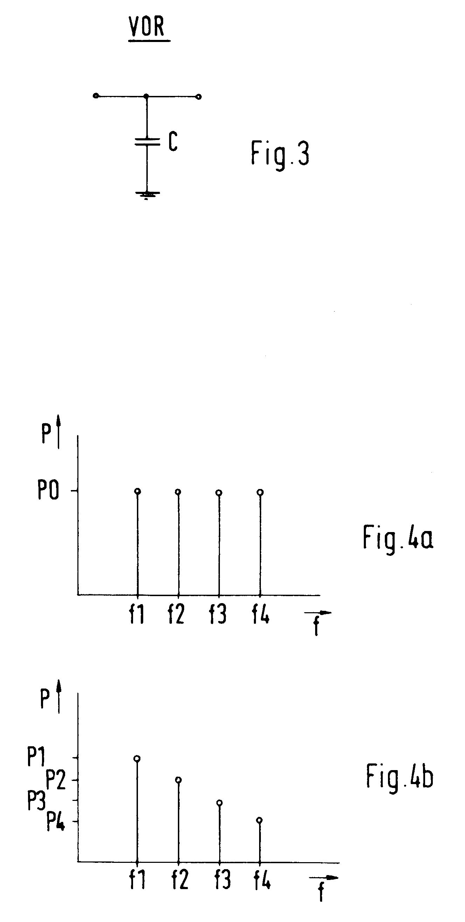

Das zweite Ausführungsbeispiel wird nun anhand der Fig. 3 beschrieben. Fig. 3 zeigt eine Vorverzerrungseinheit VOR für eine Sendeeinrichtung aus Fig. 2. Anstelle der Vorverzerrungseinheit aus Fig. 2 kann die Vorverzerrungseinheit VOR aus Fig. 3 in der Sendeeinrichtung aus Fig. 2 verwendet werden. Die Vorverzerrungseinheit VOR aus Fig. 3 beinhaltet eine Kondensator C im Querzweig. Sie dient dazu die empfangenen und ggf. verstärkten Frequenzmultiplexsignale derart vorzuverstärken, daß die zu erwartenden Verzerrungen auf den optischen Übertragungsleitungen kompensiert werden. Die Impedanz des Kondensators C bewirkt, daß ein Frequenzmultiplexsignal mit gleichen Unterträgersignalpegeln beim Durchlaufen der Vorverzerrungseinheit VOR aus Fig. 3 in ein Frequenzmultiplexsignal mit für zunehmende Frequenzen abfallenden Unterträgersignalpegeln umgesetzt werden. Mit dem Wert des Kondensators C wird der Verlauf der Unterträgersignalpegel eingestellt.

Anhand der Fig. 4 wird nun abschließend ein Verfahren zur optischen Übertragung elektrischer Frequenzmultiplexsignale aus gemultiplexten Unterträgersignalen für die beiden Ausführungsbeispiele beschrieben. Fig. 4 a) zeigt ein elektrisches Frequenzmultiplexsignal mit gleichen Unterträgersignalpegeln. Im Diagramm ist der Wert des Signalpegels über die Frequenz aufgetragen, also der Frequenzgang. Das elektrische Frequenzmultiplexsignal beinhaltet beispielhaft vier Unterträgersignale mit dem gleichen Signalpegel P0 und bei den Frequenzen f1 bis f4.

Fig. 4 b) zeigt ein elektrisches Frequenzmultiplexsignal mit unterschiedlichen Unterträgersignalpegeln. Im Diagramm ist der Wert des Signalpegels über die Frequenz aufgetragen. Das elektrische Signalgemisch beinhaltet beispielhaft vier Unterträgersignale. Das erste Unterträgersignal bei der Frequenz f1 hat den Signalpegel P1, das zweite bei f2 den Signalpegel P2, das dritte bei f3 den Signalpegel P3 und das vierte bei der Frequenz f4 den Signalpegel P4. Es gilt: P1 > P2 > P3 > P4 und f4 > f3 > f2 > f1.

Zu jedem Unterträgersignal gehört ein Frequenzspektrum mit den zugehörigen Nutzinformationsinhalten, das zur Vereinfachung der Darstellung in den Diagrammen von Fig. 4 a) und 4 b) nicht dargestellt ist.

Ein elektrisches Frequenzmultiplexsignal, wie in Fig. 4 a) dargestellt, wird beispielsweise von einer Kabelfernsehstation zu einer Sendeeinrichtung, wie in Fig. 2 dargestellt, übertragen. In der Sendeeinrichtung wird das Frequenzmultiplexsignal in einem ersten Verstärker mit konstanter, frequenzunabhängiger Verstärkung verstärkt und einer Vorverzerrungseinheit zugeführt. Beim Durchlaufen der Vorverzerrungseinheit werden Unterträgersignale höherer Frequenzen stärker gedämpft als Unterträgersignale niedriger Frequenzen, wie in Fig. 4 b) dargestellt. Die Punkte (f1, P1), (f2, P2), (f3, P3), (f4, P4) bilden demnach eine monoton fallende Funktion und liegen in erster Näherung beispielsweise auf einer Geraden. Die Steigung der Geraden ist negativ im Falle eines für zunehmende Frequenzen zunehmenden Unterträgersignalpegelverlaufs. Im Falle eines für zunehmende Frequenzen linear abfallenden Unterträgersignalpegelverlaufs aufgrund einer linearen Verzerrung ist die Steigung der Geraden durch die Punkte (f1, P1), (f2, P2), (f3, P3), (f4, P4) positiv zu wählen und ihr Betrag gleich dem des abfallenden Unterträgersignalpegelverlaufs. In beiden Fällen wird durch die Vorverzerrung eine Kompensation der zu erwartenden Verzerrungen beim Durchlaufen der optischen Übertragungsleitungen erzielt. Das vorverzerrte Frequenzmultiplexsignal wird einem zweiten Verstärker zugeführt, in dem es konstant verstärkt wird, d.h. alle Signalpegel werden gleich verstärkt. Der Verstärkungsfaktor ist so gewählt, daß die mittlere Leistung des verstärkten Frequenzmultiplexsignals für die Übertragung über die optischen Übertragungsleitungen optimiert ist. Das verstärkte Frequenzmultiplexsignal wird einem direkt modulierten Laser zugeführt, in dem es in ein optisches Signal umgesetzt wird, das über die optischen Übertragungsleitungen zu einer oder mehreren Empfangseinrichtungen übertragen wird. In den Empfangseinrichtungen wird im Idealfall, d.h. bei optimaler Kompensation, ein Frequenzmultiplexsignal empfangen, wie es in Fig. 4 a) dargestellt ist.

Anstelle der einzelnen Verwendung einer Spule oder eines Kondensators für die Vorverzerrungseinheit, kann auch eine Kombination aus Widerständen, Spulen und Kondensatoren verwendet werden. So kann in einer Vorverzerrungseinheit beispielsweise mittels einer RLC-Schaltung mit einstellbaren R-, L- und/oder C-Werten eine in einer Empfangseinrichtung gemessene Verzerrung der Unterträgersignalpegel auch während des Betriebes variabel kompensiert werden.

## Patentansprüche

1. Sendeeinrichtung (SEN) zur optischen Übertragung eines elektrischen Frequenzmultiplexsignals aus gemultiplexten Unterträgersignalen mit gleichen Signalpegeln, mit einem direkt modulierten Laser (LAS) zur Umsetzung des elektrischen Frequenzmultiplexsignals in ein optisches Signal,
**dadurch gekennzeichnet**, daß die Sendeeinrichtung (SEN) eine Vorverzerrungseinheit (VOR) zur Generierung eines Frequenzmultiplexsignals mit unterschiedlichen Unterträgersignalpegeln beinhaltet, und daß die Vorverzerrungseinheit (VOR) und der direkt modulierte Laser (LAS) hintereinander geschaltet sind.

2. Sendeeinrichtung nach Anspruch 1, dadurch gekennzeichnet, daß zwischen Vorverzerrungseinheit (VOR) und Laser (LAS) ein elektrischer Verstärker (AMP2) geschaltet ist.

3. Sendeeinrichtung (SEN) nach Anspruch 1, dadurch gekennzeichnet, daß die Schaltung der Vorverzerrungseinheit (VOR) eine Spule (L) im Längszweig beinhaltet.

4. Sendeeinrichtung (SEN) nach Anspruch 1, dadurch gekennzeichnet, daß die Schaltung der Vorverzerrungseinheit (VOR) einen Kondensator (C) im Querzweig beinhaltet.

5. Sendeeinrichtung (SEN) nach Anspruch 1, dadurch gekennzeichnet, daß in der Vorverzerrungseinrichtung (VOR) ein Frequenzmultiplexsignal mit für zunehmende Frequenzen abfallenden Unterträgersignalpegeln generierbar ist.

6. Sendeeinrichtung (SEN) nach Anspruch 5, dadurch gekennzeichnet, daß der Verlauf der abfallenden Unterträgersignalpegel umgekehrt proportional zum Verlauf der zu erwartenden Verzerrungen der Unterträgersignalpegel auf einer vorgegebenen optischen Übertragungsleitung ist.

7. Verfahren zum optischen Übertragen eines elektrischen Frequenzmultiplexsignals aus gemultiplexten Unterträgersignalen mit gleichen Signalpegeln, bei dem das Frequenzmultiplexsignal über einen direkt modulierten Laser (LAS) in ein optisches Signal umgesetzt wird, dadurch gekennzeichnet, daß das Frequenzmultiplexsignal vor der Umsetzung in ein optisches Signal in einer Vorverzerrungseinheit (VOR) in ein Frequenzmultiplexsignal mit unterschiedlichen Unterträgersignalpegeln umgesetzt wird.
